# EUROPEAN PATENT APPLICATION

(11) **EP 4 429 011 A1**
(43) Date of publication of application: **11.09.2024**
(21) Application number: 23192140.4
(22) Date of filing: 18.08.2023
(51) Int. Cl.: H01M 50/531

(54) **CELL AND ELECTRICAL APPARATUS COMPRISING THE CELL**

(30) Priority: 10.03.2023 CN 202320457378 U
(71) Applicant: AESC Japan Ltd., Kanagawa, 2520012 (JP)
(72) Inventor: SHAN, Xueyan, Jiangyin City, Wuxi City (CN)
(74) Representative: Becker, Eberhard

(57) **Abstract**

A cell (100) and an electrical apparatus including the cell (100) are provided. The cell (100) includes a casing (110), a first electrode terminal (120), an electrode assembly (130), and the insulating heat-shrinkable film (140). The casing (110) includes an end wall (111) and a side wall (112) surrounding the end wall (111). The first electrode terminal (120) is installed through the end wall (111) in an insulating manner. The electrode assembly (130) is sealed and installed in the casing (110), a first end of the electrode assembly (130) includes a first tab (132), and the first tab (132) is electrically connected to the first electrode terminal (120). The insulating heat-shrinkable film (140) is at least wrapped on a peripheral surface of the electrode assembly (130) close to the first end to insulate and isolate the first tab (132) from the side wall (112).

## Description

### BACKGROUND

### Technical Field

The disclosure relates to the technical field of batteries, and in particular, relates to cell and an electrical apparatus including the cell.

### Description of Related Art

All-tab cylindrical cells have attracted the attention of many new energy manufacturers because of their unique excellent electrical conductivity and ultra-low internal resistance. Since the casing of a cylindrical cell is usually made of conductive materials such as an aluminum casing or a steel casing, in a full-tab cylindrical cell, the insulation of the tabs is critical. An existing insulating layer between the tabs and the casing is usually an insulating tape made of PET. The insulating tape wraps the positive electrode tab and/or the negative electrode tab, and then the insulating tape is pressed down, so that the insulating tape is adhered to the end surface of the tab facing the casing, so as to insulate and isolate the tab from the side wall of the casing. However, during this process, since the tape sleeved on the outer wall of the electrode assembly needs to be pressed down to the end surface, the insulating tape is usually wrinkled. As such, interference on entering into the casing may occur easily. Further, after the cell is used for a long time, because the tape is soaked in the electrolyte, the wrinkles at the pressure of the tape are easy to warp and may thus cause insulation failure.

### SUMMARY

In view of the abovementioned shortcomings of the related art, the disclosure provides a cell and an electrical apparatus including the cell to address the problem that in an existing cell, wrinkles of an insulating tape of a tab are easy to warp and cause insulation failure.

To achieve the above and other related purposes, the first aspect of the disclosure provides a cell including a casing, a first electrode terminal, an electrode assembly, and an insulating heat-shrinkable film. The casing includes an end wall and a side wall surrounding the end wall. The first electrode terminal is installed through the end wall in an insulating manner. The electrode assembly is sealed and installed in the casing, a first end of the electrode assembly includes a first tab, and the first tab is electrically connected to the first electrode terminal. The insulating heat-shrinkable film is at least wrapped on a peripheral surface of the electrode assembly close to the first end to insulate and isolate the first tab from the side wall. Herein, the insulating heat-shrinkable film is connected as a closed loop, and a butting area is provided on a peripheral surface of the insulating heat-shrinkable film.

In the cell provided by an embodiment of the disclosure, the butting area includes a thermocompression connection area and/or an adhesive connection area.

In the cell provided by an embodiment of the disclosure, the butting area includes an overlapping area, an overlapping width of the overlapping area is less than or equal to 3mm, and a thickness of the insulating heat-shrinkable film outside the overlapping area is 0.03mm to 0.06mm.

In the cell provided by an embodiment of the disclosure, the heat-shrinkable film is made of polyethylene terephthalate (PET) or poly ethylene terephthalateco-1,4-cylclohexylenedimethylene terephthalate (PETG).

In the cell provided by an embodiment of the disclosure, the insulating heat-shrinkable film includes a side wall portion and an end surface portion. The side wall portion covers at least the peripheral surface of the electrode assembly close to the first end, and the end surface portion at least partially covers an end surface edge of the first end.

In the cell provided by an embodiment of the disclosure, an adhesive layer is provided on at least part of a contact surface between the side wall portion and the electrode assembly.

In the cell provided by an embodiment of the disclosure, the adhesive layer is disposed on an inner surface of the side wall portion and is arranged around a circumference of the side wall portion.

In the cell provided by an embodiment of the disclosure, the side wall portion wraps the entire peripheral surface of the electrode assembly, and the adhesive layer covers an area of the side wall portion corresponding to an entire circumferential side wall of the electrode assembly.

In the cell provided by an embodiment of the disclosure, the first tab is a positive tab, and the positive tab includes a plurality of metal conductive sheets.

In the cell provided by an embodiment of the disclosure, the first tab is electrically connected to the first electrode terminal through a current-collecting plate. The insulating heat-shrinkable film is wrapped on a circumferential end surface of the current-collecting plate and is provided with a through hole formed at a position corresponding to the first electrode terminal. An electrical connector on the current-collecting plate is electrically connected to the first electrode terminal through the through hole.

In the cell provided by an embodiment of the disclosure, a ratio of a length of the insulating heat-shrinkable film covering an end surface of the electrode assembly to a length of the insulating heat-shrinkable film covering a circumferential side wall of the electrode assembly is 1/3 to 2/3.

The second aspect of the disclosure further provides an electrical apparatus. The electrical apparatus includes a working portion and the cell according to the above. The working portion is electrically connected to the cell to obtain electric energy support.

In the cell provided by the disclosure, the peripheral surface of the insulating heat-shrinkable film is provided with the butting area. Therefore, the strip-shaped insulating heat-shrinkable films may be allowed to be connected end-to-end and then be further heated, heat-shrunken, and wrapped on the peripheral surface of the first end of the electrode assembly to insulate and isolate the first tab from the side wall of the casing. In this structural form, a relatively smooth covering layer may be formed on the peripheral surface where the first tab is located. Further, the insulating heat-shrinkable film with this type of structure may be directly made of a strip-shaped film body and is not affected by the demolding process of a cylindrical heat-shrinkable sleeve. Therefore, a thinner thickness is obtained, the problem of a thick heat-shrinkable film in the related art is solved, warping may not occur easily, and good insulation reliability and feasibility are provided. The electrical apparatus provided by the disclosure uses the cell provided by the disclosure for power supply, and improved reliability is thus provided.

### BRIEF DESCRIPTION OF THE DRAWINGS

To make the technical solutions provided in the embodiments of the disclosure or the related art more clearly illustrated, several accompanying drawings required by the embodiments or the related art for description are briefly introduced as follows. Obviously, the drawings in the following description are merely some embodiments of the disclosure, and for a person having ordinary skill in the art, other drawings can be obtained based on these drawings without inventive effort.
FIG. 1 is a three-dimensional schematic view of a cell according to an embodiment of the disclosure.
FIG. 2 is a three-dimensional schematic view of the cell with a casing removed according to an embodiment of the disclosure.
FIG. 3 is an enlarged view of a butting area of an insulating heat-shrinkable film in the cell according to an embodiment of the disclosure.
FIG. 4 is a schematic structural view of the insulating heat-shrinkable film in an initial state in the cell according to an embodiment of the disclosure.
FIG. 5 is a schematic view of the insulating heat-shrinkable film after butting in the cell according to an embodiment of the disclosure.
FIG. 6 is a schematic view of an installation process of the insulating heat-shrinkable film sleeved on an electrode assembly after butting in the cell according to an embodiment of the disclosure.
FIG. 7 is a schematic view of the insulating heat-shrinkable film after being installed on the electrode assembly in the cell according to an embodiment of the disclosure.
FIG. 8 is a schematic view of the insulating heat-shrinkable film heat-shrunken and molded on the electrode assembly in the cell according to an embodiment of the disclosure.
FIG. 9 is a schematic view of an initial structure of the insulating heat-shrinkable film in the cell according to another embodiment of the disclosure.
FIG. 10 is a schematic view of the installation process of the insulating heat-shrinkable film installed on the electrode assembly in the cell according to another embodiment of the disclosure.
FIG. 11 is a schematic view of the insulating heat-shrinkable film after being installed on the electrode assembly in the cell according to another embodiment of the disclosure.
FIG. 12 is a schematic view of the insulating heat-shrinkable film heat-shrunken and molded on the electrode assembly in the cell according to another embodiment of the disclosure.
FIG. 13 is a schematic structural view of the initial state of the insulating heat-shrinkable film in the cell according to still another embodiment of the disclosure.
FIG. 14 is a schematic view of the insulating heat-shrinkable film after being installed on the electrode assembly in the cell according to still another embodiment of the disclosure.
FIG. 15 is a schematic view of the insulating heat-shrinkable film heat-shrunken and molded on the electrode assembly in the cell according to still another embodiment of the disclosure.

### Description of reference numerals of the elements:

100: cell, 110: casing, 111: end wall, 112: side wall, 120: first electrode terminal, 130: electrode assembly, 131: bare cell, 132: first tab, 1321: first end surface, 133: second tab, 140: insulating heat-shrinkable film, 141: butting area, 142: end surface portion, 143: side wall portion, 144: adhesive layer, 145: first end surface corresponding area, 146: second end surface corresponding area, 147: through hole, 150: current-collecting plate, 151: electrical connector, and 160: end cap.

### DESCRIPTION OF THE EMBODIMENTS

The implementation of the disclosure is illustrated below by specific embodiments. A person having ordinary skill in the art can easily understand other advantages and effects of the disclosure from the content disclosed in this specification. The disclosure can also be implemented or applied through other different specific implementation ways. The details in this specification can also be modified or changed based on different viewpoints and applications without departing from the spirit of the disclosure. Note that the following embodiments and the features in the embodiments may be combined with each other in the case of no conflict. It should also be understood that the terminology used in the embodiments of the disclosure is for describing a specific implementation, but not for limiting the protection scope of the disclosure. The test methods for which specific conditions are not indicated in the following embodiments are usually in accordance with conventional conditions or in accordance with the conditions suggested by each manufacturer.

When the numerical ranges are given in the embodiments, it should be understood that, unless otherwise stated in the disclosure, the two endpoints of each numerical range and any numerical value between the two endpoints may be selected. Unless otherwise defined, all technical and scientific terms used in the disclosure are consistent with the grasp of the prior art by a person having ordinary skill in the art and the content of the disclosure. Any method, device, and material in the prior art similar or equivalent to the methods, devices, and materials described in the embodiments of the disclosure may also be used to implement the disclosure.

It should be noted that terms such as "upper", "lower", "left", "right", "middle" and "one" quoted in this specification are only for the convenience of description and are not used to limit the applicable scope of the disclosure. The change or adjustment of its relative relationship should also be regarded as the applicable scope of the disclosure without substantive change of the technical content.

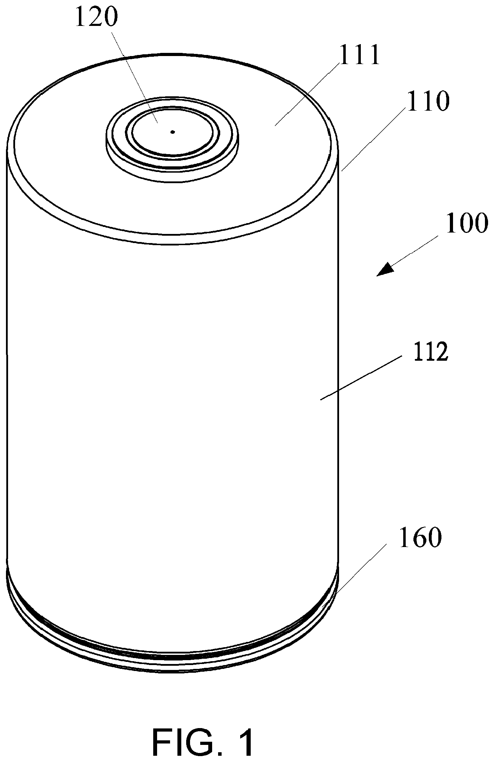

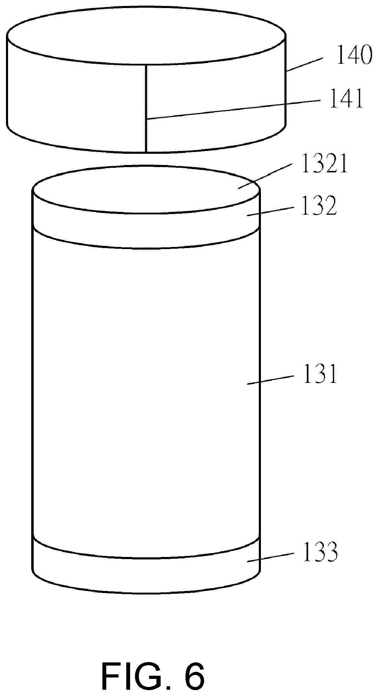

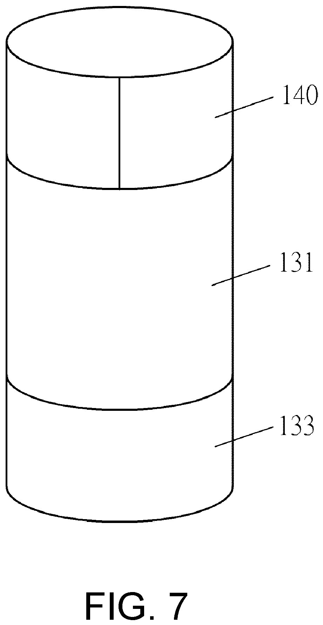

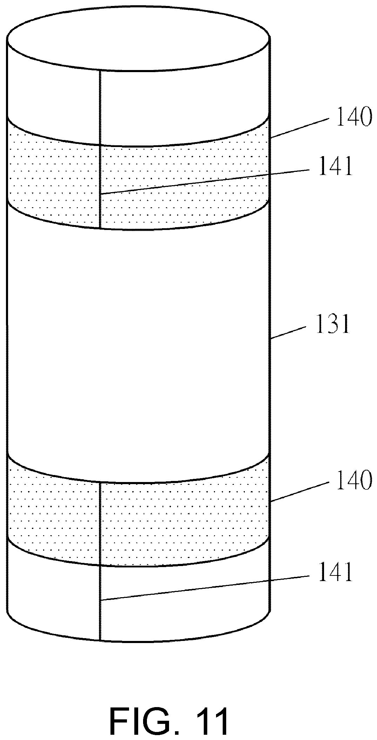

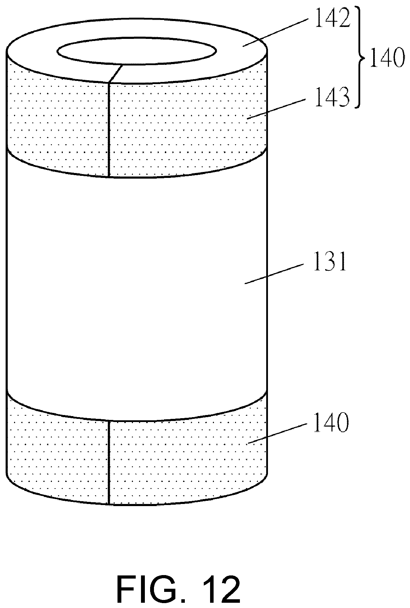

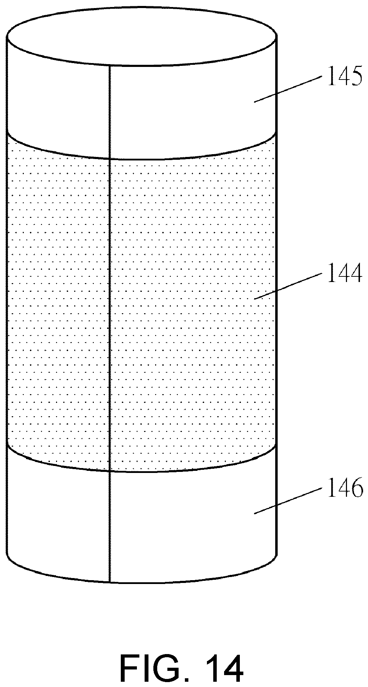

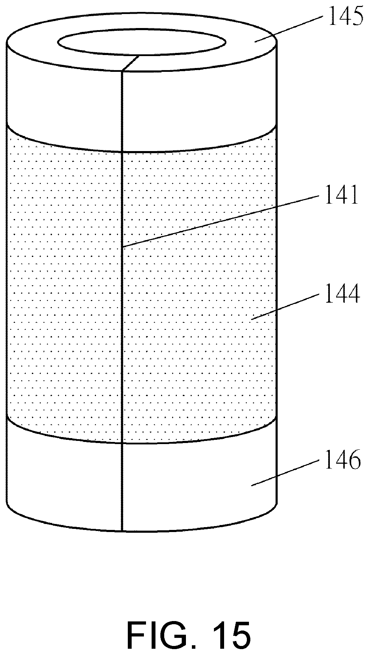

With reference to FIG. 1 to FIG. 15, the disclosure provides a cell 100 and an electrical apparatus including the cell 100. The cell 100 adopts an insulating heat-shrinkable film 140. In this way, a relatively flat coating layer may be formed on a side wall where a first tab 132 is located, and the problem that wrinkles of the tab insulating tape are easy to warp and cause insulation failure in the existing cell 100 may also be solved. A butting area 141 is provided on a peripheral surface of the insulating heat-shrinkable film 140. The insulating heat-shrinkable film 140 may be directly made of a strip-shaped film body, is not affected by the demolding process of a cylindrical heat-shrinkable sleeve, and may thus exhibit a thinner thickness.

With reference to FIG. 1 to FIG. 3, the cell 100 includes a casing 110, a first electrode terminal 120, an electrode assembly 130, and the insulating heat-shrinkable film 140. The casing 110 is used to form an inner space for accommodating the electrode assembly 130. Herein, the inner space formed by the casing 110 may be used to accommodate the electrode assembly 130, electrolyte (not shown), and other components. The casing 110 may be in various shapes and sizes, such as cylinder, cuboid, hexagonal prism, and so on. To be specific, the shape of the casing 110 may be determined according to the specific shape and size of the electrode assembly 130. The casing 110 may be made of various materials, such as copper, iron, aluminum, stainless steel, aluminum alloy, and the like.

With reference to FIG. 1 to FIG. 3, in the cell 100 provided by an embodiment of the disclosure, the casing 110 includes an end wall 111 and a side wall 112 surrounding the end wall 111. The side wall 112 and the end wall 111 together enclose a cylinder with one end closed and the other end open. An open end of the cylinder is sealed with an end cap 160. In an embodiment, the first electrode terminal 120 is electrically connected to the first tab 132 of the electrode assembly 130 through a current-collecting plate 150, and the casing 110 is electrically connected to a second tab 133 of the electrode assembly 130 directly or indirectly. The side where the first electrode terminal 120 is located has both the first electrode terminal 120 and an end surface of the casing 110, so that one end of one cell 100 may be equipped with both the positive and negative electrodes, which facilitates series and parallel connection among a plurality of cells 100 to form a cell module or a battery pack. An installation hole of the first electrode terminal is provided on the end wall 111 of the casing 110, and the first electrode terminal 120 is installed in the installation hole of the first electrode terminal in a sealed and insulated manner. Such a structure of the casing 110 improves installation efficiency, and is more excellent in terms of assembly and sealing than the casing 110 with both ends opened.

With reference to FIG. 1 to FIG. 3, the electrode assembly 130 is a component in the cell 100 where electrochemical reactions occur. One or more electrode assemblies 130 may be included within the casing 110. The electrode assembly 130 is mainly formed by winding or laminating a positive electrode sheet and a negative electrode sheet, and a separator is usually provided between the positive electrode sheet and the negative electrode sheet. The parts of the positive electrode sheet and the negative electrode sheet with active materials constitute the main body of the electrode assembly 130, and the parts of the positive electrode sheet and the negative electrode sheet that do not have active materials constitute respective tabs. The electrode assembly 130 is sealed and installed in the casing 110, and the specific form of the sealing is not limited.

With reference to FIG. 1 to FIG. 3 and FIG. 6, in an embodiment of the disclosure, the electrode assembly 130 includes a bare cell 131, a first tab 132, and a second tab 133. The first tab 132 and the second tab 133 are located at two ends of the bare cell 131. The electric property of the casing 110 is negative, the electric property of the first tab 132 is positive, and the first tab 132 of the electrode assembly 130 is electrically connected to the first electrode terminal 120. The insulating heat-shrinkable film 140 is at least wrapped on a peripheral surface of the electrode assembly 130 close to the first end to insulate and isolate the first tab 132 from the side wall 112 of the casing 110. Herein, the insulating heat-shrinkable film 140 is connected as a closed loop, and a butting area 141 is provided on a peripheral surface of the insulating heat-shrinkable film 140. The wrapping structure of the insulating heat-shrinkable film 140 may be formed by allowing the strip-shaped insulating heat-shrinkable film to be connected end-to-end and then further be heated, heat-shrunken, and wrapped on the peripheral surface of the first end of the electrode assembly 130, so as to insulate and isolate the first tab 132 from the side wall 112 of the casing 110. In this structural form, a relatively smooth covering layer may be formed on the peripheral surface where the first tab 132 is located. Further, the insulating heat-shrinkable film with this type of structure may be directly made of a strip-shaped film body and is not affected by the demolding process of a cylindrical heat-shrinkable sleeve, so a thinner thickness may be obtained.

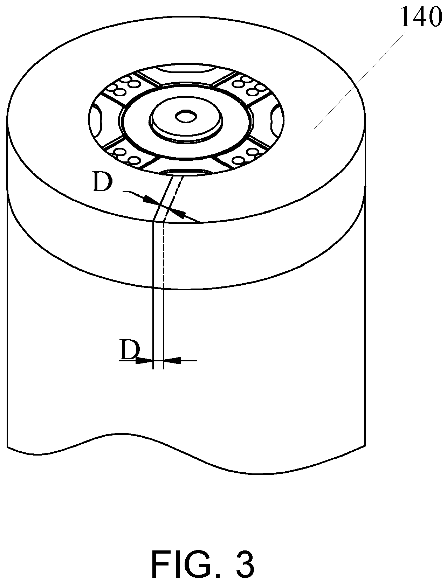

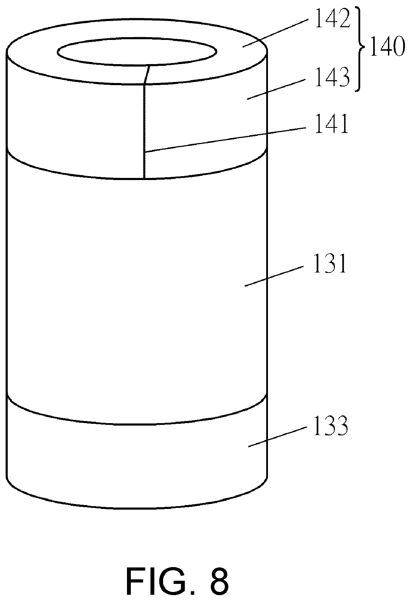

In the disclosure, although the insulating heat-shrinkable film 140 may only cover the peripheral surface of the electrode assembly 130 close to the first end, but preferably, with reference to FIG. 3 and FIG. 8, in an embodiment of the disclosure, the insulating heat-shrinkable film 140 also includes a side wall portion 143 and an end surface portion 142. The side wall portion 143 covers at least the peripheral surface of the electrode assembly 130 close to the first end, and the end surface portion 142 at least partially covers an end surface edge of the electrode assembly 130 close to the first end. In such an arrangement, the insulation between the first tab 132 and the side wall 112 of the casing 110 may be enhanced, and the first tab 132 whose end is exposed is prevented from being exposed to contact the side wall 112. The insulating heat shrinkable film 140 is wrapped around one end of the electrode assembly 130 and at least partially covers a first end surface 1321 where the first tab 132 is located, so that the first end surface 1321 of the first tab 132 which is electrically positive on the electrode assembly 130 is insulated and isolated from the casing 110 which is electrically negative. The insulating heat-shrinkable film 140 is connected as a closed loop, and each of the side wall portion 143 and the end surface portion 142 of the insulating heat-shrinkable film 140 is provided with the butting area 141. In another embodiment of the disclosure, different from the foregoing embodiment, the electrical property of the casing 110 is positive, and the electrical property of the first tab 132 is negative. The insulating heat shrinkable film 140 is wrapped around one end of the electrode assembly 130 and at least partially covers the first end surface 1321 where the first tab 132 is located, so that the end surface of the first tab 132 which is electrically negative on the electrode assembly 130 is insulated and isolated from the end wall 111 which is electrically positive.

With reference to FIG. 1 to FIG. 3 and FIG. 6, in the cell 100 provided by the disclosure, the butting area 141 may be formed in various ways, such as being formed as a thermocompression connection area, an adhesive connection area, or a combination of adhesive connection and thermocompression connection area. The butting area may be formed before and during the process when the insulating heat-shrinkable film 140 is installed on the electrode assembly 130.

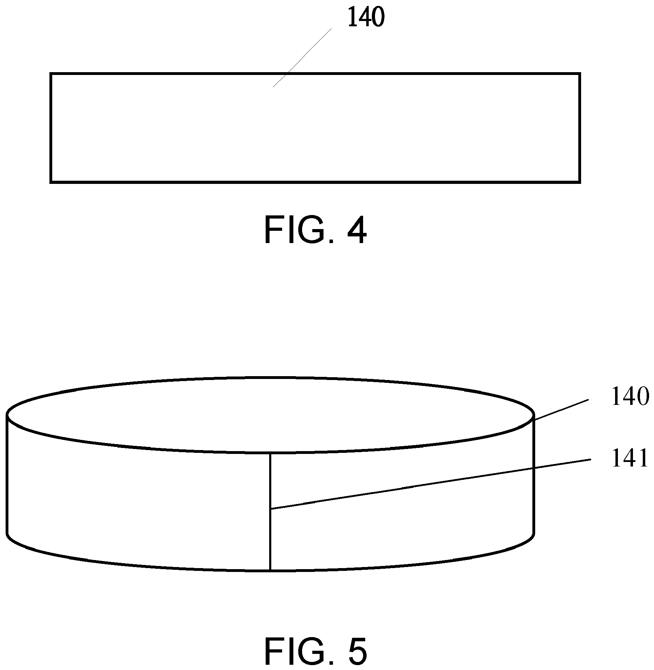

With reference to FIG. 4 to FIG. 8, in the cell 100 provided by an embodiment of the disclosure, the butting area 141 includes the thermocompression connection area only. With reference to FIG. 4, specifically, the insulating heat-shrinkable film 140 has a strip-shaped and open-loop contour in an initial state before being wrapped on the electrode assembly 130. The strip-shaped insulating heat-shrinkable film 140 forms the butting area 141 by means of high-temperature thermocompression and forms a ring-shaped insulating heat-shrinkable film 140 as a whole as shown in FIG. 5. The ring-shaped insulating heat-shrinkable film 140 is sleeved on end of the electrode assembly 130 corresponding to the first tab 132. The first tab 132 is a positive tab in the form of a cut tab. That is, before an electrode sheet is wound, the tab is cut to form a plurality of metal conductive sheets. The end surface of the tab formed by the tab cutting process is smooth, which facilitates the subsequent electrical connection between the tab and the current-collecting plate. However, in the form of tab cutting, the end surface of the tab is easy to loosen when the battery generates gas. If the conventional form of the use of an adhesive tape is adopted, the loose tab may easily push away the wrinkles formed by the tape on the end surface, and the risk of short circuit may occur easily. In this embodiment, after a heat-shrinking process, the side wall portion 143 of the ring-shaped insulating heat-shrinkable film 140 is wrapped around the peripheral surface of the first tab 132 to insulate the peripheral surface of the first tab 132 from the casing 110, and the end surface portion 142 of the insulating heat-shrinkable film 140 covers the first end surface 1321 where the first tab 132 is located. The insulating heat-shrinkable film covering the first end surface 1321 is formed by shrinking the heat-shrinkable film material itself, that is, the insulating heat-shrinkable film covering the first end surface 1321 is closely attached to the first end surface 1321. The insulating heat-shrinkable film may effectively position the multiple metal conductive sheets that cut the tab, and the tab is not easy to loosen. The combined use of the tab-cutting form and the insulating heat-shrinkable film produces a favorable effect.

With reference to FIG. 1 to FIG. 3 and FIG. 6, in the cell 100 provided by another embodiment of the disclosure, the butting area 141 includes an adhesive connection area only. The strip-shaped insulating heat-shrinkable film 140 is adhered to form the butting area 141 by adhesive strips provided on the sides and forms a ring-shaped insulating heat-shrinkable film 140 as a whole. The ring-shaped insulating heat-shrinkable film 140 is sleeved on one end of the electrode assembly 130 corresponding to the first tab 132, wrapped around one end of the electrode assembly 130 after the subsequent heat-shrinking process, and at least partially covers the end surface where the first tab 132 is located. Certainly, a person having ordinary skill in the art can understand that if necessary, the butting area 141 may include both the thermocompression connection area and the adhesive connection area, but the costs of such an arrangement are relatively high. Certainly, in other embodiments, no adhesive connection area may be provided, and only thermocompression butting is adopted. In this process, the butting area has only a thermocompression connection seam.

With reference to FIG. 1 to FIG. 3, the structure of the butting area 141 is not limited, for example, it may partially overlap or may not overlap. In the disclosure, in the cell 100 provided by an embodiment of the disclosure, the butting area 141 includes an overlapping area, and an overlapping width D of the overlapping area is less than or equal to 3mm. A thickness of the insulating heat-shrinkable film 140 outside the overlapping area is 0.03mm to 0.06mm, for example, 0.03mm, 0.04mm, 0.05mm, and 0.06mm. Within the overlapping width range and within the thickness range of the insulating heat-shrinkable film 140, a favorable insulating effect is achieved, it is easy for the insulating heat-shrinkable film 140 to enter the casing since an excessively-large thickness or an excessively-large overlapping area is avoided, and the cell may is protected from being subjected to stress concentration at the part where the heat-shrinkable film contacts the casing when the cell swells during operation. However, in other embodiments, if thermocompression connection is adopted, after the high-temperature melting and thermocompression connecting, the ends of the strip-shaped insulating heat-shrinkable film 140 are fused together to form a thermally-melted connection seam, and the overlapped part may be basically ignored and close to zero.

With reference to FIG. 1 to FIG. 3, in the disclosure, the insulating heat-shrinkable film 140 may be wrapped onto the electrode assembly 130 only by the compression force formed after heat-shrinking. However, preferably, an adhesive layer 144 is provided on at least part of a contact surface between a circumferential side wall of the insulating heat-shrinkable film 140 and a circumferential side wall of the electrode assembly 130. The circumferential side wall of the electrode assembly 130 may be the side wall corresponding to the first tab 132 or the side wall of the bare cell 131. The adhesive layer 144 may be initially positioned with a winding cell of the electrode assembly 130 when the insulating heat-shrinkable film 140 is installed and may also prevent the portion where the insulating heat-shrinkable film 140 and the side surface of the electrode assembly 130 are adhered from shrinking excessively and causing overall insulation failure during subsequent heat shrinking and heating. The setting of the adhesive layer 144 is not limited, including but not limited to glue application or setting a double-sided adhesive layer. The arrangement position of the adhesive layer 144 is not limited as well, for example, the adhesive layer 144 may be arranged on the electrode assembly 130, and when the insulating heat-shrinkable film 140 is installed, the insulating heat-shrinkable film 140 may be pressed to be adhered to the adhesive layer 144 on the electrode assembly 130. The adhesive layer 144 may also be arranged on an inner wall of the insulating heat-shrinkable film 140 and adhered to the side wall of the electrode assembly 130 when the insulating heat-shrinkable film 140 is installed. Alternatively, the adhesive layer 144 may be alternatively arranged on both the inner wall of the insulating heat-shrinkable film 140 and the side wall of the electrode assembly 130. However, it is considered that this arrangement is less economical and exhibits less manufacturability than the arrangement on only the inner wall of the insulating heat-shrinkable film 140 and on only the side wall of the electrode assembly 130.

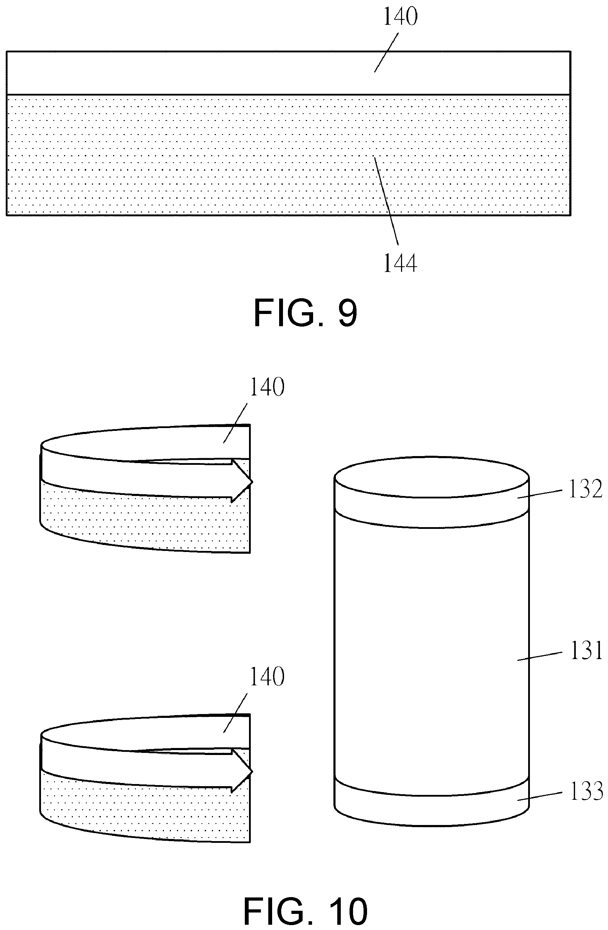

In the disclosure, it is only necessary to arrange the insulating heat-shrinkable film 140 on the side with a terminal. With reference to FIG. 9 to FIG. 13, in the cell 100 provided by an embodiment of the disclosure, the first tab 132 and the second tab 133 are arranged on the opposite ends of the electrode assembly 130. The first tab 132 and the second tab 133 need to be connected to corresponding terminals. Each of the first tab 132 and the second tab 133 needs to be provided with the insulating heat-shrinkable film 140. In the strip-shaped initial state, the adhesive layer 144 is disposed on the insulating heat-shrinkable film 140, and the adhesive layer 144 is disposed on the inner surface of the side wall portion 143 of the insulating heat-shrinkable film 140 and is disposed around the circumference of the side wall portion 143. After being installed on the electrode assembly 130, the adhesive layer 144 is disposed on at least part of the contact surface between the circumferential side wall of the insulating heat-shrinkable film 140 and the circumferential side wall of the electrode assembly 130. The adhesive layer 144 on the insulating heat-shrinkable film 140 corresponding to the side of the first tab 132 may be disposed between the side wall of the first tab 132 and/or the side wall of the bare cell 131. The adhesive layer 144 on the insulating heat-shrinkable film 140 corresponding to the side of the second tab 133 may be disposed between the side wall of the second tab 133 and/or the side wall of the bare cell 131. The butting area is formed after the insulating heat-shrinkable film 140 is adhered to and wrapped around the circumference, and the butting area 141 is thus formed. The two insulating heat-shrinkable films 140 adhered to the first tab 132 and the second tab 133 have peripheral surfaces protruding out of the tabs on the corresponding sides. After heat shrinking, the peripheral surfaces protruding out of the tabs on the corresponding sides cover the end surfaces of the corresponding tabs. In some other embodiments, an insulating heat-shrinkable film sleeve may be formed by butting first, and then the insulating heat-shrinkable film sleeve is placed on the electrode assembly 130 and then adhered to the side wall of the bare cell 131.

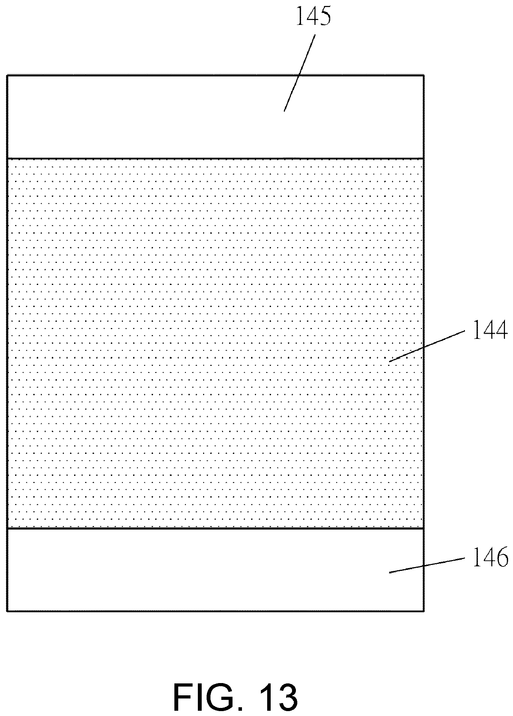

Considering that the side walls of most of the existing bare cells 131 also need to be coated with blue glue to bundle the winding cells, with reference to FIG. 13 to FIG. 15, in the cell 100 provided by an embodiment of the disclosure, the side wall portion 143 wraps the entire peripheral surface of the electrode assembly 130. The adhesive layer 144 on the insulating heat-shrinkable film 140 covers an area (including a side wall area of the first tab 132, a side wall area of the second tab 133, and a side wall area of the bare cell 131) of the side wall portion 143 corresponding to the entire circumferential side wall of the electrode assembly 130. Moreover, a first end surface corresponding area 145 protruding out of the first tab 132 is provided on a side of the adhesive layer 144 facing the first tab 132, and a second end surface corresponding area 146 protruding out of the second tab 133 is provided on a side of the adhesive layer 144 facing the second tab 133. After heat shrinking, the first end surface corresponding area 145 covers the first end surface 1321 of the first tab 132, and the second end surface corresponding area 146 covers a second end surface (not shown) of the second tab 133. In this way, an insulating coating layer may be formed on the tabs on both sides of the electrode assembly 130, and an insulating coating layer may also be integrally formed on the side wall of the bare cell 131. As such, efficiency may be improved, and one-time bundling and end insulation may also be implemented. Further, when the insulating heat-shrinkable film 140 and the blue glue on the side of the bare cell 131 are integrated arranged, the insulating heat-shrinkable film 140 and blue glue are prevented from overlapping which causes excess thickness. Difficulty in entering the casing by excess thickness and possible stress concentration by cell 100 swelling may be prevented. The problem that the blue glue on the large surface of the bare cell 131 is easy to fall off after soaking in the electrolyte may also be solved.

In the disclosure, the insulating heat-shrinkable film 140 is made of a heat-shrinkable material, which is a polymer shape memory material and is a material obtained by radiation processing of polymer materials. Ordinary polymer materials such as polyethylene, polyvinyl chloride, etc. usually have a linear structure, and the linear structure of the polymer materials is transformed into a network structure under the action of radiation sources such as electron accelerators. This type of network-shaped polymer material obtained by radiation processing is the heat shrinkable material. The heat-shrinkable material exhibits a unique shape memory effect, and the heat-shrinkable material that has been expanded and cooled can shrink back to its original shape after being heated. During use, the heat-shrinkable material is heated to make it shrink, and the shrunken heat-shrinkable material forms a heat-shrinkable film, which is flat and tightly wrapped on the outer surface of the object and insulates, seals, and protects the wrapped object. In an embodiment of the disclosure, the material of the heat-shrinkable film includes but is not limited to polyethylene terephthalate (PET) or (poly ethylene terephthalateco-1,4-cylclohexylenedimethylene terephthalate (PETG). PET and PETG heat shrinkable films may be made from raw materials purchased from SK chemicals. PET thermoplastic polyester is a kind of crystalline polymer with higher melting point and exhibits favorable mechanical properties, good elasticity, wear resistance and impact resistance, low water absorption, good dimensional stability, good molding conditions, and good creep resistance under load. PETG is a transparent and amorphous copolyester with outstanding toughness and high impact strength. The impact strength of PETG is 3 to 10 times that of modified polyacrylates, and PETG has a wide processing range, high mechanical strength, and good flexibility. Compared to PVC, PETG has high transparency and favorable gloss and exhibits easy printing and environmental protection advantages.

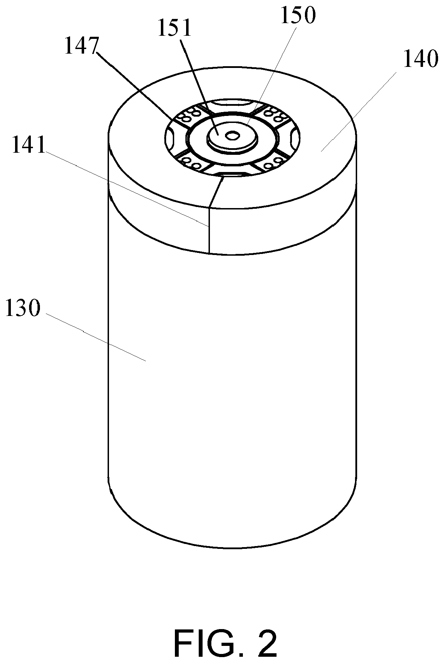

In the disclosure, the electrical connection manner between the first tab 132 and the first electrode terminal 120 is not limited, and the two may be electrically connected directly or indirectly. With reference to FIG. 2, in the cell 100 provided by an embodiment of the disclosure, the first tab 132 is electrically connected to the first electrode terminal 120 through the current-collecting plate 150. The insulating heat-shrinkable film 140 is wrapped on a circumferential end surface of the current-collecting plate 150 and is provided with a through hole 147 formed at a position corresponding to the first electrode terminal 120. An electrical connector 151 on the current-collecting plate 150 is electrically connected to the first electrode terminal 120 through the through hole 147. The electrical connection manner between the electrical connector 151 and the first electrode terminal 120 includes but not limited to a welding manner that can achieve current transmission.

In the cell 100 provided by an embodiment of the disclosure, a ratio of a length of the insulating heat-shrinkable film 140 covering an end surface of the electrode assembly 130 to a length of the insulating heat-shrinkable film 140 covering the circumferential side wall of the electrode assembly 130 is 1/3 to 2/3. The range of the ratio may be any numerical range between 1/3 to 2/3, such as 1/3, 1/2, 1/3, and so on. With this proportional relationship, a relatively stable installation relationship may be maintained, so that the insulating heat-shrinkable film 140 is not easy to fall off due to an excessively small length of the circumferential side wall of the electrode assembly 130 after heat-shrink and molding and may not easily cause insulation failure due to excessively little covering of the end surface of the electrode assembly 130.

In the second aspect of the disclosure, an electrical apparatus is provided. The electrical apparatus includes a working portion and the cell 100 according to the above. The working portion is electrically connected to the cell 100 to obtain electric energy support. The electrical apparatus may be a vehicle, a mobile phone, a portable device, a notebook computer, a ship, a spacecraft, an electric toy, an electric tool, etc. The vehicle may be a fuel vehicle, a gas vehicle, or a new energy vehicle, and the new energy vehicle may be a pure electric vehicle, a hybrid vehicle, or a range-extended vehicle, etc. The spacecraft includes an airplane, a rocket, a space shuttle, a spaceship, etc. The electric toy includes a stationary or mobile electric toy, for example, a game machine, an electric car toy, an electric boat toy, an electric airplane toy, etc. The electric tool includes a metal cutting electric tool, a grinding electric tool, an assembling electric tool, and an electric tool for railway use, such as an electric drill, an electric grinder, an electric wrench, an electric screwdriver, an electric hammer, an impact drill, a concrete vibrator, an electric planer, etc. The above electrical apparatus is not particularly limited in the embodiments of the disclosure.

In the cell 100 provided by the disclosure, the peripheral surface of the insulating heat-shrinkable film 140 is provided with the butting area 141. As such, the strip-shaped insulating heat-shrinkable film 140 may be installed end-to-end on the end portion of the electrode assembly 130 corresponding to the first tab 132 and may be further heated, heat-shrunken, and wrapped around one end of the electrode assembly 130 and partially cover the end surface where the first tab 132 is located, so as to insulate and isolate the electrode assembly 130 and the end wall of the casing 110 of the cell 100. In this structural form, a relatively smooth covering layer may be formed on the end surface where the first tab 132 is located. Further, the insulating heat-shrinkable film 140 with this type of structure may directly adopt a strip-shaped film body and is not affected by the demolding process. Therefore, a thinner thickness may be obtained, the problem of a thick heat-shrinkable film in the related art is solved, warping may not occur easily, and good insulation reliability and feasibility are provided. The electrical apparatus provided by the disclosure uses the cell 100 provided by the disclosure for power supply, and improved reliability is thus provided. Therefore, some practical problems in the related art are effectively overcome, so that the disclosure exhibits high utilization value and use significance.

## Claims

1. A cell (100), comprising:
a casing (110) comprising an end wall (111) and a side wall (112) surrounding the end wall (111);
a first electrode terminal (120) installed through the end wall (111) in an insulating manner;
an electrode assembly (130) sealed and installed in the casing (110), wherein a first end of the electrode assembly (130) comprises a first tab (132), and the first tab (132) is electrically connected to the first electrode terminal (120); and
an insulating heat-shrinkable film (140), at least wrapped on a peripheral surface of the electrode assembly (130) close to the first end to insulate and isolate the first tab (132) from the side wall (112),
wherein the insulating heat-shrinkable film (140) is connected as a closed loop, and a butting area (141) is provided on a peripheral surface of the insulating heat-shrinkable film (140).

2. The cell (100) according to claim 1, wherein the butting area (141) comprises a thermocompression connection area and/or an adhesive connection area.

3. The cell (100) according to claim 1 or 2, wherein the butting area (141) comprises an overlapping area, an overlapping width of the overlapping area is less than or equal to 3mm, and a thickness of the insulating heat-shrinkable film (140) outside the overlapping area is 0.03mm to 0.06mm.

4. The cell (100) according to any one of claims 1 to 3, wherein a material of the heat-shrinkable film (140) is polyethylene terephthalate (PET) or poly ethylene terephthalateco-1,4-cylclohexylenedimethylene terephthalate (PETG).

5. The cell (100) according to any one of claims 1 to 4, wherein the insulating heat-shrinkable film (140) comprises a side wall portion (143) and an end surface portion (142), the side wall portion (143) covers at least the peripheral surface of the electrode assembly (130) close to the first end, and the end surface portion (142) at least partially covers an end surface edge of the first end.

6. The cell (100) according to any one of claims 1 to 5, wherein an adhesive layer (144) is provided on at least part of a contact surface between the side wall portion (143) and the electrode assembly (130).

7. The cell (100) according to any one of claims 1 to 6, wherein the adhesive layer (144) is disposed on an inner surface of the side wall portion (143) and is arranged around a circumference of the side wall portion (143).

8. The cell (100) according to any one of claims 1 to 7, wherein the side wall portion (143) wraps the entire peripheral surface of the electrode assembly (130), and the adhesive layer (144) covers an area of the side wall portion (143) corresponding to an entire circumferential side wall (112) of the electrode assembly (130).

9. The cell (100) according to any one of claims 1 to 8, wherein the first tab (132) is a positive tab, and the positive tab comprises a plurality of metal conductive sheets.

10. The cell (100) according to any one of claims 1 to 9, wherein the first tab (132) is electrically connected to the first electrode terminal (120) through a current-collecting plate (150), the insulating heat-shrinkable film (140) is wrapped on a circumferential end surface of the current-collecting plate (150) and is provided with a through hole (147) formed at a position corresponding to the first electrode terminal (120), and an electrical connector (151) on the current-collecting plate (150) is electrically connected to the first electrode terminal (120) through the through hole (147).

11. The cell (100) according to any one of claims 1 to 10, wherein a ratio of a length of the insulating heat-shrinkable film (140) covering an end surface of the electrode assembly (130) to a length of the insulating heat-shrinkable film (140) covering a circumferential side wall (112) of the electrode assembly (130) is 1/3 to 2/3.

12. An electrical apparatus comprising a working portion and the cell (100) according to any one of claims 1 to 11, wherein the working portion is electrically connected to the cell (100) to obtain electric energy support.
